# EUROPÄISCHE PATENTANMELDUNG

(11) **EP 1 507 341 A2**
(43) Veröffentlichungstag der Anmeldung: **16.02.2005**
(21) Anmeldenummer: 04018606.6
(22) Anmeldetag: 05.08.2004
(51) Int. Cl.: H04B 7/08, H04B 1/52

(54) **Kommunikationsendgerät für Mehrfachempfang und Echokompensation**

(30) Priorität: 14.08.2003 DE 10337417
(71) Anmelder: SIEMENS AKTIENGESELLSCHAFT, 80333 München (DE)
(72) Erfinder: Civeira Munoz, Carlos, 42105 Wuppertal (DE); Wisniowski, Damian, 46395 Bocholt (DE)

(57) **Zusammenfassung**

Kommunikationsendgerät mit einer HF-Schaltungsanordnung, die wenigstens einen ersten (Rx1) und einen zweiten Empfangspfad (Rx2) für empfangene Signale und wenigstens einen Sendepfad (Tx) für ausgehende Signale aufweist, einer Basisband-Schaltungsanordnung (BB), die über Wandler (AD; DA) mit der HF-Schaltungsanordnung verbunden ist und zur Auswertung von empfangenen Signalen des ersten Empfangspfades (Rx1) und empfangenen Signalen des zweiten Empfangspfades (Rx2) zur Bestimmung erforderlicher Amplituden- und Phasenänderungen der empfangenen Signale des zweiten Empfangspfades (Rx2) für einen Mehrfachempfang ausgebildet ist, einem Amplituden-/Phasenanpassungsschaltkreis (APA) zum Anpassen des empfangenen Signals des zweiten Empfangspfades (Rx2) an das empfangene Signal des ersten Empfangspfades (Rx1) aufgrund der von der Basisband-Schaltungsanordnung (BB) bestimmten Amplituden- und Phasenänderungen und zum Erzeugen eines angepassten Ausgangssignals, und einem Kombinierer (K), an dem das empfangene Signal des ersten Empfangspfades (Rx1) und das Ausgangssignal des Amplituden-/Phasenanpassungsschaltkreises (APA) anliegt und dessen Ausgangssignal der Basisband-Schaltungsanordnung zugeführt ist, wobei der Sendepfad einen Koppler (KP) zum Auskoppeln eines Anteils der ausgehenden Signale aufweist, ein zwischen einer ersten und einer zweiten Stellung umschaltbarer Schalter (S) vorgesehen ist, wobei in der ersten Stellung ein Ausgangssignal einer Antennenanordnung (Rx2-A) des zweiten Empfangspfades (Rx2) und in der zweiten Stellung der von dem Koppler (KP) ausgekoppelte Anteil der ausgehenden Signale dem Amplituden-/Phasenanpassungsschaltkreis (APA) zugeführt ist, und die Basisband-Schaltungsanordnung (BB) zur Auswertung von empfangenen Signalen des ersten Empfangspfades (Rx1) und des ausgekoppelten Anteils der ausgehenden Signale zur Bestimmung erforderlicher Amplituden- und Phasenänderungen des ausgekoppelten Anteils der ausgehenden Signale für eine Echokompensation ausgebildet ist.

## Beschreibung

Die Erfindung bezieht sich auf ein Kommunikationsendgerät mit einer HF-Schaltungsanordnung, die wenigstens einen ersten und einen zweiten Empfangspfad für empfangene Signale und wenigstens einen Sendepfad für ausgehende Signale aufweist, einer Basisband-Schaltungsanordnung, die über Wandler mit der HF-Schaltungsanordnung verbunden ist und zur Auswertung von empfangenen Signalen des ersten Empfangspfades und empfangenen Signalen des zweiten Empfangspfades zur Bestimmung erforderlicher Amplituden- und Phasenänderungen der empfangenen Signale des zweiten Empfangspfades für einen Mehrfachempfang ausgebildet ist, einem Amplituden/Phasenanpassungsschaltkreis zum Anpassen des empfangenen Signals des zweiten Empfangspfades an das empfangene Signal des ersten Empfangspfades aufgrund der von der Basisband-Schaltungsanordnung bestimmten Amplituden- und Phasenänderungen und zum Erzeugen eines angepassten Ausgangssignals, und einem Kombinierer, an dem das empfangene Signal des ersten Empfangspfades und das Ausgangssignal des Amplituden-/Phasenanpassungsschaltkreises anliegt und dessen Ausgangssignal dem Basisband-Schaltkreis zugeführt ist.

Ein derart ausgestaltetes Kommunikationsendgerät ist dazu in der Lage, einen Mehrfachempfang vorzunehmen, und zwar mit Hilfe des ersten und des zweiten Empfangspfades. Die jeweils empfangenen Signale sind unkorreliert und werden typischerweise auf gesonderten HF-Pfaden verarbeitet.

Zur geeigneten Überlagerung der empfangenen Signale des ersten und des zweiten Empfangspfades ist der Amplituden/Phasenanpassungsschaltkreis vorgesehen, der die über den zweiten Empfangspfad empfangenen Signale hinsichtlich ihrer Amplitude und Phase derart modifiziert, dass eine geeignete Überlagerung mit den empfangenen Signalen des ersten Empfangspfades ermöglicht wird. Das überlagerte Signal wird zur weiteren Verarbeitung der typischerweise als Chip vorliegenden Basisband-Schaltungsanordnung zugeleitet.

Allgemein dient der Mehrfachempfang dazu, eine Signalqualität eines Eingangssignals für ein mobiles Kommunikationsendgerät zu verbessern. Allgemein bindet der Mehrfachempfang allerdings auch Empfangsressourcen des mobilen Kommunikationsendgerätes, da mehrere Empfangspfade für Signale desselben Mobilkommunikationsstandard eingesetzt werden müssen, die sonst für einen Multistandard-Betrieb zur Verfügung stehen könnten.

Ausgehend hiervon liegt der Erfindung die Aufgabe zu Grunde, zur Verbesserung einer Empfangsqualität eines mobilen Kommunikationsendgerätes eine HF-Schaltung anzugeben, deren Komponenten wirtschaftlicher genutzt werden.

Diese Aufgabe wird bei der eingangs angegebenen HF-Schaltungsanordnung dadurch gelöst, dass der Sendepfad einen Koppler zum Auskoppeln eines Anteils der ausgehenden Signale aufweist, ein zwischen einer ersten und einer zweiten Stellung umschaltbarer Schalter vorgesehen ist, wobei in der ersten Stellung ein Ausgangssignal einer Antennenanordnung des zweiten Empfangspfades und in der zweiten Stellung der von dem Koppler ausgekoppelte Anteil der ausgehenden Signale dem Amplituden-/Phasenanpassungsschaltkreis zugeführt ist, und die Basisband-Schaltungsanordnung zur Auswertung von empfangenen Signalen des ersten Empfangspfades und des ausgekoppelten Anteils der ausgehenden Signale zur Bestimmung erforderlicher Amplituden- und Phasenänderungen des ausgekoppelten Anteils der ausgehenden Signale für eine Echokompensation ausgebildet ist.

Auf diese Weise wird es ermöglicht, dass der Amplituden/Phasenanpassungsschaltkreis für verschiedene Verfahren benutzt werden kann, die jeweils für sich allein zu einer Verbesserung einer Qualität empfangener Signale führen. Im einzelnen ist der Amplituden-/Phasenanpassungsschaltkreis auch von der Basisband-Schaltungsanordnung derart angesteuert, dass er Amplituden- und Phasenwerte für ein Echokompensationsverfahren erhält. Dabei wird der ausgekoppelte Anteil der ausgehenden Signale hinsichtlich seiner Amplitude und Phase derart modifiziert, dass für das empfangene Signal des ersten Sendepfades eine Echokompensation stattfindet. Es ist zu bemerken, dass das Verfahren der Echokompensation an sich zum Stand der Technik gehört, wobei im Mittelpunkt steht, von einem Lautsprecher des Kommunikationsendgerätes herrührender Echosignale in dem Sendepfad des Kommunikationsendgerätes zu unterdrücken.

Da ein Schalter vorgesehen ist, der sich zwischen einer ersten und einer zweiten Stellung umschalten lässt, ist es möglich, zwischen einem Mehrfachempfang und einer Echokompensation umzuschalten, wobei jeweils derselbe Amplituden/Phasenanpassungsschaltkreis zum Einsatz kommt, der jedoch auf unterschiedliche Weise gewonnene Amplituden- und Phasenwerte von der Basisbank-Schaltungsanordnung erhält.

Bevorzugt ist dem ersten und dem zweiten Empfangspfad sowie dem Sendepfad jeweils eine eigene Antennenanordnung und ein eigenes Filter zugeordnet, wobei die vorgesehenen Filter entweder Sende- oder Empfangsfilter sind. Auf diese Weise liegt eine besonders ausgeprägte Entkopplung der einzelnen Pfade voneinander vor.

Alternativ ist es auch möglich, bei einem weiteren Ausführungsbeispiel vorzusehen, dem ersten Empfangspfad und dem Sendepfad eine gemeinsame Antennenanordnung zuzuordnen, die mit einem Duplex-Filter in Verbindung steht, dass einen Sende-Filter und einen Empfangs-Filter aufweist. Auf diese Weise kann Hardware für die HF-Schaltungsanordnung des Kommunikationsendgerätes eingespart werden.

Bei einem weiteren Ausführungsbeispiel der Erfindung kann es vorgesehen sein, dass Kommunikationsendgerät sowohl für Halbduplex-Betrieb als auch für Vollduplex-Betrieb auszulegen. Dabei ist unter einem Halbduplex-Betrieb ein solcher Betrieb des Kommunikationsendgerätes zu verstehen, bei dem in aller Regel abwechselnd ein Senden und ein Empfangen von Signalen erfolgt. Dem gegenüber zeichnet sich der Vollduplex-Betrieb dadurch aus, dass simultan gesendet und empfangen werden kann. Sowohl für einen Halbduplex-Betrieb als auch für einen Vollduplex-Betrieb ist es jeweils durch Betätigung des Schalters möglich, entweder nur eine Echokompensation oder nur einen Mehrfachempfang zu wählen. Selbstverständlich kann die HF-Schaltungsanordnung insoweit erweitert sein, dass weitere Sendepfade und/oder Empfangspfade vorgesehen sind, die in üblicherweise als gesonderte Pfade ausgeführt sind.

Bei einer bevorzugten Ausführungsform kann es vorgesehen sein, dass die Basisband-Schaltungsanordnung derart ausgelegt ist, dass sie den Schalter abhängig davon steuert, ob ein Mehrfachempfang mit Hilfe des ersten und zweiten Empfangspfades oder eine Echokompensation mit Hilfe des ersten Empfangspfades und des Kopplers eine bessere Qualität des Ausgangssignals des Kombinierers bereitstellen. Dabei wird die Entscheidung, ob Mehrfach oder Echokompensation für eine Signalqualität günstiger sind, von einer Signalauswertung abhängen, die von den Basisband-Chip übernommen wird. Diese Signalauswertung wie auch die Steuerung des Schalters können mit Hilfe von Software realisiert sein.

Ausführungsbeispiele der Erfindung werden nachfolgend anhand der Zeichnungen noch näher erläutert. Es zeigen:
- Figur 1: eine Schaltungsanordnung eines Kommunikationsendgerätes, die zwischen einem Echokompensations-Betriebsmodus und einem MehrfachempfangBetriebsmodus umschaltbar ist, gemäß einer ersten Ausführungsform und
- Figur 2: eine Schaltungsanordnung eines Kommunikationsendgerätes, die zwischen einem Echokompensations-Betriebsmodus und einem MehrfachempfangBetriebsmodus umschaltbar ist, gemäß einer zweiten Ausführungsform.

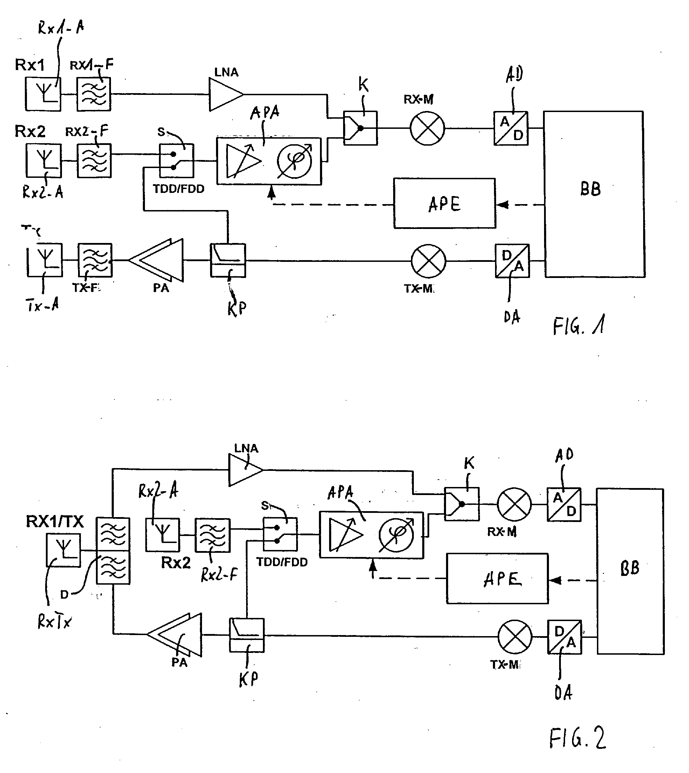

Figur 1 zeigt eine in einem Kommunikationsendgerät einsetzbare Schaltungsanordnung. Zu sehen ist eine HF-Schaltungsanordnung mit einem ersten Empfangspfad Rx1, einem zweiten Empfangspfad Rx2 und einem Sendepfad Tx. Diesen Pfaden sind jeweilige Antennenanordnungen Rx1-A, Rx2A, Tx-A und Bandpassfilter Rx-F1, Rx-F2, Tx-F zugeordnet, deren Bandbreite an gewünschte Empfangs- und Sendebandbreiten der einzelnen Pfade angepasst sind. Ein empfangendes Signal des ersten Sendepfades Rx1 gelangt über das zugeordnete Filter Rx-F1 zu einem Verstärker LNA, der sich durch ein geringes Signalrauschen auszeichnet. Ein Ausgangssignal des Verstärkers LNA wird einem ersten Eingang eines Kombinierers K zugeführt. Ein Ausgangssignal des Kombinierers K gelangt über einen Empfangspfad-Mischer Rx-M und einen Analog-/Digital-Wandler AD zu einer Basisband-Schaltungsanordnung BB, die üblicherweise als Chip vorliegt.

Ein mit der Basisband-Schaltungsanordnung BB hervorgebrachtes auszusendendes Signal gelangt über einen Digital-/Analog-Wandler DA zu einem Sendepfad-Mischer Tx-M und wird daran anschließend über einen Koppler KP, dessen Funktion später näher erläutert wird, einem Leistungsverstärker PA zugeführt. Ein Ausgangssignal des Leistungsverstärkers PA durchläuft das Sendefilter Tx-F und wird dann über die Sendeantenne Tx-A ausgestrahlt.

Der zweite Empfangspfad Rx2 kann simultan mit dem ersten Empfangspfad Rx1 benutzt werden, um einen Mehrfachempfang für eine Kommunikationsverbindung zu ermöglichen. Dazu durchläuft ein über den zweiten Empfangspfad Rx2 empfangenes Signal das zugehörige Empfangsfilter Rx-F2 und gelangt zu einem ersten Eingang eines Schalters S. Ein zweiter Eingang des Schalters S ist mit einem Ausgang des Kopplers KP im Sendepfad Tx verbunden, so dass an diesem zweiten Eingang des Schalters S ein ausgekoppelter Anteil eines auszusendenden Signals anliegt. Der Schalter S lässt sich zwischen dem ersten und dem zweiten Eingang umschalten, so dass entweder ein über den zweiten Empfangspfad Rx2 empfangenes Signal oder der genannte ausgekoppelte Signalanteil aus dem Empfangspfad Tx von dem Schalter S weitergeleitet wird. Diese Weiterleitung erfolgt zu einem Eingang eines Amplituden/Phasenanpassungsschaltkreises APA, der das an seinem Eingang jeweils anliegende Signal hinsichtlich seiner Amplitude und Phase anpasst und somit ein angepasstes Ausgangssignal erzeugt. Dies geschieht aufgrund von Informationen, die über eine Amplituden-/Phasenabschätzung APE von der Basisband-Schaltungsanordnung BB zur Verfügung gestellt werden.

Ein mit Hilfe des Amplituden-/Phasenanpassungsschaltkreises APA gewonnenes Ausgangssignal wird einem zweiten Eingang des Kombinierers K zugeführt und nimmt denselben Weg zu der Basisband-Schaltungsanordnung BB wie ein über den ersten Empfangspfad Rx1 empfangenes Signal.

Die Basisband-Schaltungsanordnung BB ist sowohl zur Durchführung einer Echokompensation und der damit einhergehenden Amplituden- und Phasenanpassung des von dem Koppler KP ausgekoppelten Anteils des auszusendenden Signals als auch für einen Mehrfachempfang ausgelegt, bei dem eine Phasen/Amplitudenanpassung für ein über den zweiten Empfangspfad Rx2 empfangenes Signal vorgenommen werden muss. Abhängig von einer Stellung des Schalters S arbeitet die Basisband-Schaltungsanordnung BB entweder auf die eine oder auf die andere Weise, so dass der Amplituden/Phasenanpassungsschaltungsanordnung APA die jeweils für eine Echokompensation oder einen Mehrfachempfang erforderlichen Phasen- und Amplitudeninformationen zur Verfügung gestellt werden.

Figur 2 zeigt eine andere Ausführungsform einer HF-Schaltungsanordnung für ein mobiles Kommunikationsendgerät, wobei gegenüber der anhand der Figur 1 beschriebenen Ausführungsform erfolgende Modifikationen vorliegen: Statt der Antennenanordnungen Rx1-A, Tx-A des ersten Empfangspfades Rx1 und des Sendepfades Tx bei der Ausführungsform nach Figur 1 ist bei der Ausführungsform nach Figur 2 eine gemeinsame Antennenanordnung RxTx vorgesehen, die sowohl für den ersten Empfangspfad Rx1 als auch für den Sendepfad Tx zum Einsatz kommt. Die Antennenanordnung RxTx ist mit einem Duplexer D verbunden, der zwei Bandpassfilter aufweist, die voneinander entkoppelt sind. Sämtliche übrigen Komponenten der Ausführungsform nach Figur 2 entsprechen in ihrer Anordnung und Funktion den bereits anhand der Figur 1 erläuterten Komponenten der ersten Ausführungsform.

Bei beiden Ausführungsformen einer HF-Schaltungsanordnung für ein Kommunikationsendgerät ist die Basisband-Schaltungsanordnung BB derart ausgelegt, dass sie den Schalter S abhängig davon steuert, ob ein Mehrfachempfang mit Hilfe des ersten und zweiten Empfangspfades Rx1, Rx2 oder eine Echokompensation mit Hilfe des ersten Empfangspfades Rx1 und des Kopplers KP eine besser Qualität des Ausgangssignals des Kombinierers K bereitstellt. Zu diesem Zweck kann es vorgesehen sein, zwischen diesen beiden Betriebsarten umzuschalten und jeweils die an der Basisband-Schaltungsanordnung BB eintreffende Signalqualität zu messen, so dass die Entscheidung zwischen Echokompensation und Mehrfachempfang getroffen werden kann.

Die beiden veranschaulichten Ausführungsformen einer HF-Schaltungsanordnung für ein Kommunikationsendgerät sind sowohl für einen Halbduplex-Betrieb (TDD) als auch für einen Vollduplex-Betrieb (FDD) ausgelegt. Da in dem Halbduplex-Betrieb nicht gleichzeitig gesendet und empfangen wird, ist in diesem Fall eine Echokompensation nicht erforderlich, so dass der Schalter S im Halbduplex-Betrieb immer in derjenigen Stellung stehen kann, bei der Mehrfachempfang ermöglicht wird.

Bei dem Vollduplex-Betrieb kann eine Entscheidung, ob Echokompensation oder Mehrfachempfang gewünscht ist, wie bereits oben dargelegt, getroffen werden. Dabei ist es auch möglich, dass eine Festlegung der Stellung des Schalters S manuell vorgenommen wird.

## Patentansprüche

1. Kommunikationsendgerät mit
einer HF-Schaltungsanordnung, die wenigstens einen ersten (Rx1) und einen zweiten Empfangspfad (Rx2) für empfangene Signale und wenigstens einen Sendepfad (Tx) für ausgehende Signale aufweist,
einer Basisband-Schaltungsanordnung (BB), die über Wandler (AD; DA) mit der HF-Schaltungsanordnung verbunden ist und zur Auswertung von empfangenen Signalen des ersten Empfangspfades (Rx1) und empfangenen Signalen des zweiten Empfangspfades (Rx2) zur Bestimmung erforderlicher Amplituden- und Phasenänderungen der empfangenen Signale des zweiten Empfangspfades (Rx2) für einen Mehrfachempfang ausgebildet ist,
einem Amplituden-/Phasenanpassungsschaltkreis (APA) zum Anpassen des empfangenen Signals des zweiten Empfangspfades (Rx2) an das empfangene Signal des ersten Empfangspfades (Rx1) aufgrund der von der Basisband-Schaltungsanordnung (BB) bestimmten Amplituden- und Phasenänderungen und zum Erzeugen eines angepassten Ausgangssignals, und
einem Kombinierer (K), an dem das empfangene Signal des ersten Empfangspfades (Rx1) und das Ausgangssignal des Amplituden-/Phasenanpassungsschaltkreises (APA) anliegt und dessen Ausgangssignal der Basisband-Schaltungsanordnung zugeführt ist,
**dadurch gekennzeichnet, dass**
der Sendepfad einen Koppler (KP) zum Auskoppeln eines Anteils der ausgehenden Signale aufweist,
ein zwischen einer ersten und einer zweiten Stellung umschaltbarer Schalter (S) vorgesehen ist, wobei in der ersten Stellung ein Ausgangssignal einer Antennenanordnung (Rx2-A) des zweiten Empfangspfades (Rx2) und in der zweiten Stellung der von dem Koppler (KP) ausgekoppelte Anteil der ausgehenden Signale dem Amplituden-/Phasenanpassungsschaltkreis (APA) zugeführt ist, und
die Basisband-Schaltungsanordnung (BB) zur Auswertung von empfangenen Signalen des ersten Empfangspfades (Rx1) und des ausgekoppelten Anteils der ausgehenden Signale zur Bestimmung erforderlicher Amplituden- und Phasenänderungen des ausgekoppelten Anteils der ausgehenden Signale für eine Echokompensation ausgebildet ist.

2. Kommunikationsendgerät nach Anspruch 1,
**dadurch gekennzeichnet, dass**
dem ersten und zweiten Empfangspfad (Rx1, Rx2) sowie dem Sendepfad (Tx) jeweils eine eigene Antennenanordnung und ein eigenes Filter (Rx1-F, Rx2-F, Tx-F) zugeordnet sind.

3. Kommunikationsendgerät nach Anspruch 1,
**dadurch gekennzeichnet, dass**
dem ersten Empfangspfad (Rx1) und dem Sendepfad (Tx) eine gemeinsame Antennenanordnung (RxTx) zugeordnet ist, die mit einem Duplex-Filter (D) in Verbindung steht.

4. Kommunikationsendgerät nach einem der Ansprüche 1 bis 3,
**dadurch gekennzeichnet, dass**
es sowohl für Halbduplex-Betrieb als auch für Vollduplex-Betrieb ausgelegt ist.

5. Kommunikationsendgerät nach einem der Ansprüche 1 bis 4,
**dadurch gekennzeichnet, dass**
die Basisband-Schaltungsanordnung (BB) derart ausgelegt ist, dass sie den Schalter (S) abhängig davon steuert, ob ein Mehrfachempfang mit Hilfe des ersten (Rx1) und zweiten Empfangspfades (Rx2) oder eine Echokompensation mit Hilfe des ersten Empfangspfades (Rx1) und des Kopplers (KP) eine bessere Qualität des Ausgangssignals des Kombinierers (K) bereitstellt.
